# EUROPÄISCHE PATENTANMELDUNG

(11) **EP 1 174 388 A1**
(43) Veröffentlichungstag der Anmeldung: **23.01.2002**
(21) Anmeldenummer: 01112040.9
(22) Anmeldetag: 23.05.2001
(51) Int. Cl.: C01B 9/02, C01B 33/107, B01D 25/12, B01D 29/11, B01D 29/76, B01D 37/00, B01D 5/00, F28B 9/02

(54) **Abtrennung von Metallchloriden aus deren Suspensionen in Chlorsilanen**

(30) Priorität: 20.06.2000 DE 10030252
(71) Anmelder: Degussa AG, 40474 Düsseldorf (DE); Wacker-Chemie GmbH, 81737 München (DE)
(72) Erfinder: Vendt, Bernd, 45739 Oer-Erkenschwick (DE); Köhler, Bernd, 01612 Leckwitz (DE); Schulz, Eberhard, 01587 Riesa (DE)

(57) **Zusammenfassung**

Die Erfindung betrifft ein Verfahren zur Abtrennung von Metallchloriden aus deren Suspensionen in Chlorsilanen, bei dem man die Suspension unter Luft- und Feuchtigkeitsausschluß in einer inertisierten Zone unter Druck filtriert, den Filterkuchen in einer inertisierten Zone zerkleinert und den zerkleinerten Filterkuchen einer Lösungszone zuführt, in der die Metallchloride zu einer wäßrigen Metallchlorid-Lösung gelöst werden. Die Erfindung betrifft weiterhin eine Filter- und Lösevorrichtung für dieses Verfahren sowie einen Apparat für die Einleitung des Rohgases in eine Suspension von Metallchloriden in Chlorsilanen zur Erzeugung eines Edukts für das genannte Verfahren.

## Beschreibung

Die Erfindung betrifft ein Verfahren zur Abtrennung von Metallchloriden aus deren Suspensionen in Chlorsilanen, wie sie bei der Kondensation von gasförmigen, Metallchloride enthaltenden Reaktionsgemischen aus der Umsetzung von technischem Silizium mit Chlorwasserstoff anfallen, sowie zur weiteren Behandlung der Metallchloride bis zu einer wäßrigen, salzsauren Metallchloridlösung. Die Erfindung betrifft weiterhin eine Filter- und Lösevorrichtung zur Trennung der Suspension von Metallchloriden in Chlorsilanen und zur weiteren Behandlung der abgetrennten Metallchloride.

### 1. Stand der Technik

Es ist bekannt, daß technisches, metallische Verunreinigungen enthaltendes Silicium mit Chlorwasserstoff bei Temperaturen von 270 bis 1.000°C sowohl in Festbett- als auch in Wirbelschichtreaktoren zu Chlorsilanen umgesetzt werden kann. Man erhält ein gasförmiges Reaktionsgemisch, das vorwiegend, je nach der Reaktionstemperatur, aus einem Gemisch von Trichlorsilan und Tetrachlorsilan (Siliziumtetrachlorid) besteht. Die metallischen Verunreinigungen des Siliciums, hauptsächlich Eisen, Aluminium und Calcium, setzen sich zu den entsprechenden Chloriden um. Ein Teil dieser Chloride wird zusammen mit aus dem Reaktor ausgetragenem feinkörnigen Siliziumstaub, dessen Menge je nach Reaktortyp und -belastung sehr unterschiedlich ist, in nach dem Reaktor angeordneten Zyklonen oder Filterapparaten abgeschieden. Insbesondere werden Calcium- und Eisenchlorid bei der Abkühlung des gasförmigen Reaktionsgemisches überwiegend auf den feinen Siliziumteilchen als feste Metallchloride abgeschieden und können so leicht mit dem Staub ausgetragen werden. Der restliche Anteil der Metallchloride, überwiegend Aluminiumchlorid, verbleibt in Dampfform in dem abgekühlten gasförmigen Reaktionsgemisch.

Insbesondere Aluminiumchlorid neigt dazu, sich bei Temperaturen unterhalb von etwa 180°C, wie sie zur Kondensation der Chlorsilane unter Atmosphärendruck angewandt werden müssen, als fester Belag in Rohrleitungen, auf Kühlflächen oder sonstigen Apparateflächen abzuscheiden. Der Stand der Technik sieht deshalb verschiedene Lösungen vor, um die Kondensation der Chlorsilane trotz dieser Neigung zur Feststoffabscheidung möglichst störungsarm durchzuführen und auch das anfallende Aluminiumchlorid möglichst elegant abzutrennen. Bei einem bekannten Verfahren wird eine erste Kondensationsstufe mit indirekter Kühlung, die üblicherweise mittels Kühlwasser als Kühlmedium erfolgt, in stehenden Rohrbündelwärmeüberträgern durchgeführt, die von unten von dem metallchloridhaltigen, gasförmigen Reaktionsgemisch durchströmt werden. Das nach unten abfließende Kondensat soll das als Feststoff ausgefallene Metallchlorid wegspülen und die Wärmeaustauschflächen freihalten. Zur Vermeidung von Verstopfungen am Gaseintritt werden an diesen besonders kritischen Stellen oftmals Freistoßvorrichtungen eingebaut, die den Strömungsquerschnitt möglichst lange freihalten sollen. Aus den Suspensionen von Metallchloriden in Chlorsilanen, die durch Kondensation entstehen, müssen die Metallchloride abgetrennt werden.

Bei einem weiteren bekannten, mit indirekter Kühlung arbeitenden Verfahren wird das metallchloridhaltige dampfförmige Reaktionsgemisch durch einfache Doppelmantelkühler geleitet. Man erhält wiederum eine Suspension von Metallchloriden in Chlorsilanen, aus denen die Metallchloride abgetrennt werden müssen. Auf den Kühlflächen wächst jedoch nach und nach ein Teil der abgeschiedenen Metallchloride auf, wodurch sich der Strömungsquerschnitt entsprechend verringert. Wenn ein bestimmter Füllungsgrad erreicht wird, leitet man das Reaktionsgemisch auf einen gleichartigen Parallelkühler, entfernt den Metallchloridbelag durch Spülen mit Wasser und trocknet anschließend den Kühler. Diese Operation ist mit einem häufigen Ausund Wiedereinbau des Kühlers verbunden, ermöglicht aber immerhin einen quasi-kontinuierlichen Betrieb.

Nach DE 629 853 wird das metallchloridhaltige dampfförmige Reaktionsgemisch in eine Schmelze eingeleitet, die aus einem Aluminiumchlorid/Alkalichlorid-Gemisch besteht und vor allem Aluminumchlorid und Eisenchlorid weitgehend zurückhält. Die Chlorsilane werden durch Kondensation der weitgehend Metallchlorid-freien Dämpfe gewonnen.

Schließlich ist ein kontinuierliches Verfahren bekannt, bei dem das dampfförmige, Metallchloride enthaltende Reaktionsgemisch in flüssige Chlorsilane eingeleitet wird und die abgeschiedenen festen Metallchloride von den flüssigen Chlorsilanen abgetrennt werden. Bei einer bestimmten Ausführungsform dieses Verfahrens wird das dampfförmige, Metallchloride enthaltende Reaktionsgemisch (Rohgas) mit einer Temperatur, die beispielsweise etwa 300°C betragen kann, mit einem vertikal gerichteten, feinzerteilten Strom von Chlorsilanen in innige Berührung gebracht. Als Chlorsilane verwendet man zweckmäßig das Reaktionsprodukt der Chlorsilan-Synthese, das z.B. mit einer Temperatur von 40 bis 50°C eingesetzt wird. Ein Teil der Chlorsilane (insbesondere das niedrig siedende Trichlorsilan) verdampft, das Rohgas wird entsprechend abgekühlt, und die Metallchloride scheiden sich als Feststoffe in den flüssigen Chlorsilanen ab. Das Gemisch aus abgekühltem Rohgas und Metallchloride enthaltenden flüssigen Chlorsilanen gelangt in ein Trenngefäß, aus dessen oberem Teil die vorwiegend mit leichter siedenden Chlorsilandämpfen beladene Gasphase abgezogen wird. Aus dem unteren Teil des Trenngefäßes wird ein Teil der flüssigen Chlorsilan-Phase, in der die höhersiedenden Chlorsilane angereichert sind und die die suspendierten Metallchloride enthält, abgezogen. Die Metallchloride werden abgetrennt, und die flüssige Phase wird durch Destillation auf Chlorsilane aufgearbeitet. Ein anderer Teil der flüssigen Chlorsilan-Phase wird als Rücklauf in eine Kolonne geführt, in der aus der erwähnten, vorwiegend mit leichter siedenden Chlorsilanen beladenen Gasphase die mitgeführten Chlorsilane weitgehend ausgewaschen werden. Aus der verbleibenden Gasphase werden die darin noch immer in erheblichen Mengen enthaltenen, vorwiegend leichter siedenden Chlorsilane durch Tieftemperaturkühlung abgeschieden und zum einen Teil durch Destillation auf Chlorsilane aufgearbeitet, gegebenenfalls zusammen mit der aus dem unteren Teil des Trenngefäßes abgezogenen und von Metallchloriden befreiten Chlorsilan-Phase, und zum anderen Teil als Rücklauf in die erwähnte Kolonne zurückgeführt.

### 2. Nachteile der Verfahren nach dem Stand der Technik

Bei den meisten der erwähnten Verfahren fallen Suspensionen von Metallchloriden in Chlorsilanen an, aus denen die Metallchloride abgetrennt werden müssen. Die Trennung ist schon deshalb schwierig, weil Trichlorsilan an der Luft entflammbar ist und alle Chlorsilane hydrolyseempfindlich sind. Dies gilt natürlich auch für die Chlorsilane, die an dem abgetrennten Metallchlorid haften. Zudem kann die Hydratisierung des Aluniniumchlorids, das den Hauptanteil an den Metallchloriden stellt, explosionsartig erfolgen. Weiterhin müssen aus Gründen des Arbeitsschutzes Vorkehrungen getroffen werden, um Emissionen von Chlorsilanen und/oder Chlorwasserstoff zu vermeiden. Das Verfahren nach DE 629 853 liefert zwar keine Suspensionen von Metallchloriden in Chlorsilanen. Es hat jedoch den Nachteil, daß die Schmelze häufig erneuert werden muß, wozu ständig oder häufig ein Teil der im Kreis geführten Schmelze abgezogen und aufgearbeitet werden muß.

### 3. Aufgaben der Erfindung

Eine Aufgabe der Erfindung besteht darin, ein Verfahren bereitzustellen, nach dem sich Metallchloride aus deren Suspensionen in Chlorsilanen sicher und zuverlässig abscheiden lassen und das keine aufwendige Erneuerung und Aufarbeitung von Metallsalzschmelzen erfordert. Weitere Aufgaben und Vorteile der Erfindung werden sich aus der nachfolgenden Beschreibung ergeben.

### 4. Zeichnungen

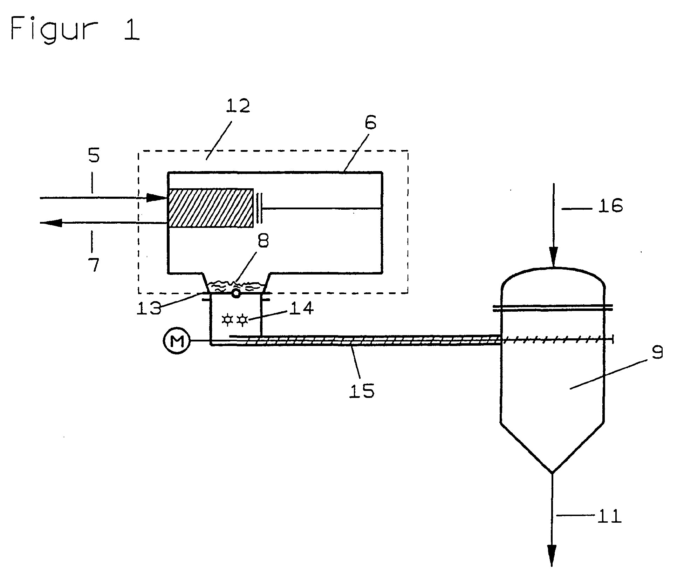

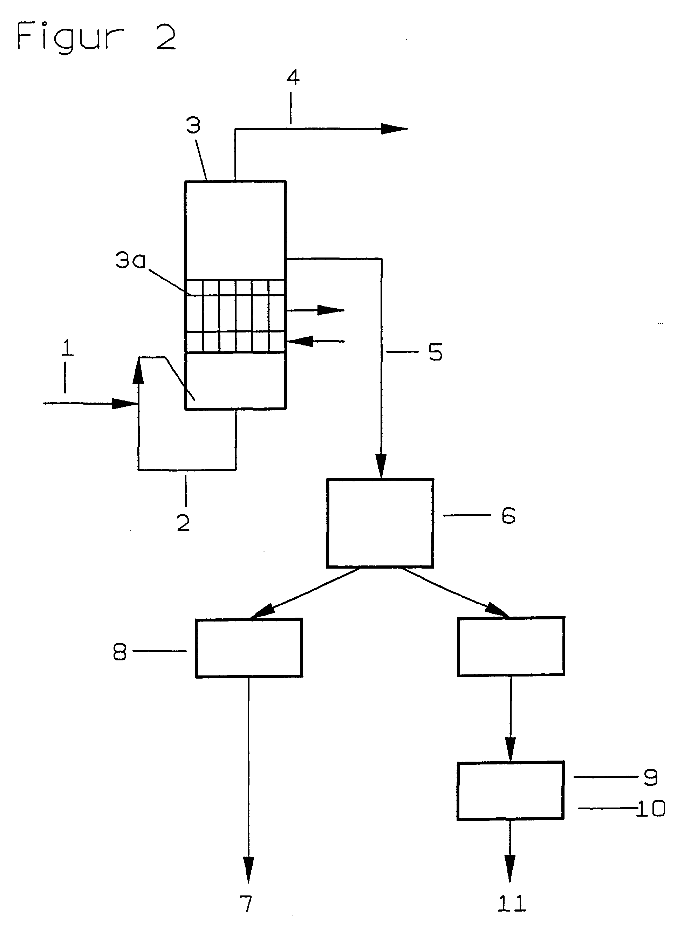

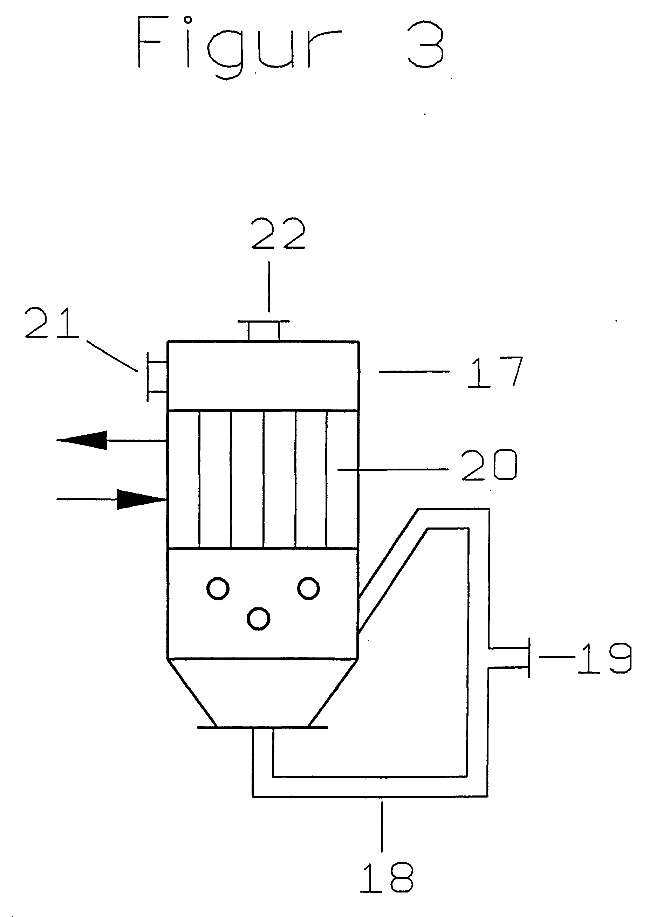

Figur 1 stellt ein Schema einer Anlage dar, in der das erfindungsgemäße Verfahren zur Abtrennung von Metallchloriden aus deren Suspensionen in Chlorsilanen sowie die weitere Behandlung der abgetrennten Metallchloride durchgeführt werden kann. Figur 2 stellt das Blockschema einer Anlage dar, in der ein Edukt des erfindungsgemäßen Verfahrens, nämlich Suspensionen von Metallchloriden in Chlorsilanen, durch Kondensation aus Rohgasen der Chlorsilan-Synthese durch Umsetzung von technischem Silizium mit Chlorwasserstoff gewonnen wird und die Metallchloride erfindungsgemäß abgetrennt und weiter behandelt werden. Figur 3 stellt einen Apparat (oder Kondensator) dar, in dem ein Teilschritt des Verfahrens gemäß Abbildung 2 ausgeführt wird, nämlich die Einleitung des Rohgases in eine Suspension von Metallchloriden in flüssigem Chlorsilan, die zu Edukten des erfindungsgemäßen Verfahrens führt.

### 5. Kurzbeschreibung der Erfindung

Ein Gegenstand der Erfindung ist ein Verfahren zur Abtrennung von Metallchloriden aus deren Suspensionen in Chlorsilanen, bei dem man die Suspension unter Luft- und Feuchtigkeitsausschluß in einer inertisierten Zone unter Druck filtriert, den Filterkuchen in einer inertisierten Zone zerkleinert und den zerkleinerten Filterkuchen einer Lösungszone zuführt, in der die Metallchloride zu einer wäßrigen Metallchloridlösung gelöst werden. Als Filtervorrichtung zur Filtration unter Druck eignen sich besonders ein Kerzenfilter oder eine Filterpresse.

Ein anderer Gegenstand der Erfindung ist eine Filter- und Lösevorrichtung, mit der in flüssigen Chlorsilanen suspendierte feste Metallchloride erfindungsgemäß abgetrennt und in eine wäßrige Lösung überführt werden können, gekennzeichnet durch einen gasdichten Filterraum **12**; eine darin eingeschlossene Filtervorrichtung **6**; einen Zulauf für die Suspension **5**; einen Ablauf für flüssige Chlorsilane **7**; eine Inertgasschleuse **13**; einen Zerkleinerer **14** für den Filterkuchen **8**; eine Fördervorrichtung **15** für den zerkleinerten Filterkuchen; und ein Lösegefäß **9** mit einem Zulauf **16** für Wasser oder Salzsäure und einem Ablauf **11** für die saure Metallsalzlösung.

Ein weiterer Gegenstand der Erfindung ist eine Ausgestaltung des zuvor genannten Verfahrens, bei der die Edukte, d.h. die Suspensionen, aus dem bei der Umsetzung von technischem Silizium mit Chlorwasserstoff entstehenden heißen, gasförmigen Reaktionsgemisch (Rohgas) gewonnen werden, indem man das Rohgas in eine im Kreis geführte Suspension von Metallchloriden in Chlorsilanen einleitet und die Temperatur des Rohgases von dessen Einleitungstemperatur bis zur Temperatur des bei der Einleitung entstehenden dreiphasigen Gas/-Flüssigkeits/Feststoff-Gemisches zum Teil durch direkte, durch Verdampfung von Chlorsilanen bewirkte Kühlung und zum Teil durch indirekte Kühlung absenkt.

Ein anderer Gegenstand der Erfindung ist ein Apparat, (oder Kondensator), der bei dieser Ausgestaltung des zuvor genannten Verfahrens verwendet wird, in dem die erwähnte Einleitung des Rohgases in flüssige Chlorsilane stattfindet und der gekennzeichnet ist durch ein Hohlgefäß 17 mit vorzugsweise zylindrischem Querschnitt und vorzugsweise einer konischen Verjüngung im unteren Teil; ein äußeres Umlaufrohr **18**; einen an dem Umlaufrohr angebrachten Rohgaseinleitungsstutzen **19**; einen in dem Hohlgefäß **17** angeordneten Wärmetauscher **20**; einen Überlaufstutzen **21** und einen Gasabzugstutzen **22**.

Weitere Gegenstände der Erfindung werden sich aus der nachfolgenden Beschreibung der Erfindung ergeben.

### 6. Ausführliche Beschreibung der Erfindung

### 6.1 Beschreibung des Verfahrens

Das erfindungsgemäße Verfahren kann absatzweise durchgeführt werden, indem man die zugeführte Suspension so lange filtriert, bis die Filtervorrichtung, vorzugsweise eine Filterpresse, voll ist. Man kann quasi-kontinuierlich mit alternierend geschalteten Filtervorrichtungen arbeiten, indem man die Suspension kontinuierlich so lange einer ersten Filtervorrichtung zuführt, bis diese voll ist, und dann auf eine parallel geschaltete zweite Filtervorrichtung umschaltet, während die erste entleert wird.

Als Edukte dienen die Suspensionen von Metallchloriden in Chlorsilanen, die durch Kondensation aus den heißen, Metallchlorid-haltigen dampfförmigen Reaktionsgemischen (Rohgas) der Umsetzung von technischem Silizium mit Chlorwasserstoff gewonnen werden. Sie enthalten neben kleineren Mengen von Eisen(III)-chlorid und Calciumchlorid vor allem das relativ leichtflüchtige Aluminiumchlorid. Der Gehalt an Metallchloriden beträgt im allgemeinen 0,1 bis 8 Gew.-%, bezogen auf Chlorsilane.

Eine zweckmäßige Ausgestaltung des Verfahrens nach der Erfindung besteht darin, daß man die festen Metallchloride aus ihrer Suspension in flüssigen Chlorsilanen abtrennt, indem man zunächst die Suspension unter Druck mit einem Kerzenfilter oder in einer Filterpresse filtriert. Da Trichlorsilan an der Luft brennbar ist und alle Chlorsilane hydrolyseempfindlich sind, findet die Trennung in einer inertisierten Zone statt. Die Filtervorrichtung befindet sich also in einem gasdichten Raum, der Luft und Luftfeuchtigkeit ausschließt und während des Betriebs mit einem trockenen Inertgas, wie Stickstoff oder Argon, gefüllt ist. Das Filtrat kann durch Destillation in die einzelnen Chlorsilane zerlegt werden.

Der Filterkuchen ist in der Regel von ziemlich fester Beschaffenheit. Es ist daher zweckmäßig, ihn über eine wiederum inertisierte Zone (oder Schleuse) einer Zerkleinerungsvorrichtung zuzuführen. Die Schleuse trennt den Filterraum mit der Filtervorrichtung, der von Feuchtigkeit frei gehalten werden muß, von den Folgezonen, in denen es auf Feuchtigkeitsausschluß nicht mehr ankommt. Die Ausgestaltung derartiger Schleusen ist dem Fachmann bekannt.

Der zerkleinerte Filterkuchen wird in eine Zone transportiert, in der die Metallsalze in Wasser oder verdünnter Salzsäure zu einer wäßrigen Metallsalz-Lösung gelöst werden, die in der Regel 0,1 bis 1,0 Gew.-% Metallsalz enthält und ohne weiteres einer Abwasserbehandlung zugeführt werden kann.

Das Verfahren nach der Erfindung eignet sich zur Trennung von Suspensionen von Metallchloriden in Chlorsilanen, die in beliebiger Weise aus den Reaktionsgasen der Chlorsilan-Synthese erhalten werden können. So lassen sich z.B. vorteilhaft die Suspensionen von Metallchloriden in Chlorsilanen aufarbeiten, die nach dem Verfahren der gleichzeitig anhängigen Patentanmeldung DE 100 30 251 durch Kondensation der heißen, Metallchloride enthaltenden dampfförmigen Reaktionsgemische (Rohgas) der üblichen Chlorsilan-Synthese aus technischem Silicium und Chlorwasserstoff gewonnen werden, indem man die Reaktionsgemische in eine Suspension von Metallchloriden in flüssigen Chlorsilanen einleitet. Dieses Verfahren zur Herstellung eines für das erfindungsgemäße Verfahren geeigneten Edukts wird in der Folge ausführlich beschrieben. Es sei jedoch betont, daß sich das erfindungsgemäße Verfahren auch zur Trennung von Suspensionen aus Metallchloriden in flüssigen Chlorsilanen eignet, die auf beliebige andere Weise erzeugt wurden.

Das Verfahren nach der genannten Patentanmeldung wird im allgemeinen unter Atmosphärendruck oder erhöhtem Druck bis zu etwa 5 bar durchgeführt. Das Rohgas tritt, gegebenenfalls nach Vorkühlung, in der Regel mit einer Temperatur (Einleitungstemperatur) von 135 bis 200°C in das Verfahren ein. Es enthält, je nach den Reaktionsbedingungen der Chlorsilan-Synthese, im allgemeinen 2 bis 50 Gew.-% nicht umgesetzten Chlorwasserstoff. Der Rest setzt sich überwiegend aus Wasserstoff und Chlorsilanen zusammen, unter denen wiederum Trichlorsilan und Tetrachlorsilan (Siliziumtetrachlorid) weit überwiegen. Weiterhin sind, je nach dem Reinheitsgrad des technischen Siliciums, im allgemeinen 0,1 bis 8 Gew.-% Metallchloride, bezogen auf die Chlorsilane, vorhanden, die im wesentlichen aus Eisen-, Calciumund insbesondere Aluminiumchlorid bestehen. Das Rohgas kann weiterhin nicht umgesetzten Siliziumstaub enthalten, auf dem ein Teil der Metallchloride abgeschieden ist. Diesen Siliziumstaub kann man vor der Kondensation nach dem Verfahren der genannten Patentanmeldung in Zyklonen oder Filterapparaten trocken abtrennen. Wenn dieser Schritt entfällt, enthalten die als Edukte des vorliegenden Verfahrens verwendbaren Suspensionen neben den Metallchloriden auch Siliciumstaub. Der Siliziumstaub liegt in den Rohgasen im allgemeinen in Mengen von 1 bis 5 Gew.-% vor, bezogen auf Chlorsilane.

Bei dem Verfahren nach der genannten Patentanmeldung wird das Rohgas in eine Suspension von Metallchloriden in Chlorsilanen eingeleitet. Die Chlorsilane sind weit überwiegend die hauptsächlichen Reaktionsprodukte der Chlorsilan-Synthese, d.h. Trichlorsilan und Tetrachlorsilan. Vorteilhaft wird das Rohgas mit einer solchen Geschwindigkeit in die Suspension eingeleitet, daß eine Lineargeschwindigkeit des entstehenden dreiphasigen Gas/Flüssigkeits/Feststoff-Gemisches von 2 bis 8 m/s resultiert. Der Kreislauf der Chlorsilane kann durch entsprechend gerichtete Einleitung des Rohgases in das zirkulierende Flüssigkeit/Feststoff-Gemisch - das System arbeitet dann nach dem Prinzip der Mammutpumpe - sowie des entstehenden Gas/Flüssigkeit/-Feststoff-Gemisches in das Hohlgefäß **17** bewirkt werden.

Beim Einleiten in die Suspension von Metallchloriden in flüssigen Chlorsilanen wird das Rohgas zunächst direkt gekühlt, und zwar durch Verdampfen vorzugsweise der niedriger siedenden Chlorsilane, insbesondere von Trichlorsilan, die in der im Kreis geführten Suspension von Metallchloriden in flüssigen Chlorsilanen vorliegen. Dabei kondensiert ein Teil der im Rohgas enthaltenen Chlorsilane, insbesondere höher siedendes Siliziumtetrachlorid. Weiterhin scheiden sich die im Rohgas enthaltenen Metallchloride in fester Form ab. Es entsteht ein dreiphasiges Gemisch, das eine Suspension von Feststoffen (Metallchloride und gegebenenfalls Siliziumstaub) in flüssigen Chlorsilanen sowie die noch gasförmigen Bestandteile des Rohgases umfaßt. Dieses dreiphasige Gemisch durchströmt dann eine Kühlzone mit indirekter Kühlung und trennt sich danach in eine Gasphase, die nicht kondensierte Chlorsilane sowie die übrigen gasförmigen Betandteile des Rohgases enthält, und eine Suspension von Metallchloriden in Chlorsilanen.

In beiden Kühlzonen herrscht ein Siedegleichgewicht, so daß die Temperaturen im gesamten System, einschließlich der im Kreis geführten Suspension ähnlich sind. Sie liegen bei einer Arbeitsweise unter Atmosphärendruck in der Regel zwischen 30 und 60°C. Der überschießende Wärmeinhalt des Rohgases und die Kondensationswärme der verflüssigten Chlorsilane werden letztendlich durch die indirekte Kühlung abgeführt, also an die Kühlflüssigkeit, in der Regel Wasser, abgegeben. Die erforderliche Menge pro Zeiteinheit und die Temperatur der Kühlflüssigkeit werden entsprechend bemessen; sie lassen sich aus den relevanten Parametern des Rohgases, der Kühlflüssigkeit und des Wärmetauschers, der die indirekte Kühlung bewirkt, unschwer errechnen.

Es ist ein wichtiges Merkmal des Verfahrens nach der genannten deutschen Patentanmeldung, daß das Rohgas zunächst mit flüssigen Chlorsilanen (in denen Metallchloride suspendiert sind) in Berührung kommt und durch Verdampfung vorzugsweise der niedrig siedenden Chlorsilane direkt gekühlt wird, worauf eine indirekte Kühlung erfolgt. Überraschenderweise treten praktisch keine Abscheidungen von Metallchloriden auf den Kühlflächen des Wärmetauschers oder gar Verstopfungen auf, wie dies bei den Verfahren nach dem Stand der Technik geschieht, die mit indirekter Kühlung arbeiten.

Die von der Suspension von Metallchloriden in Chlorsilanen abgetrennte Gasphase enthält noch erhebliche Mengen an Chlorsilanen, überwiegend leichter flüchtige Chlorsilane, die in üblicher Weise durch gegebenenfalls mehrstufige Abkühlung auf Temperaturen bis zu -70°C kondensiert und abgetrennt werden können. Der verbleibende Chlorwasserstoff kann in Wasser zu Salzsäure absorbiert oder in üblicher Weise durch nachfolgende Verdichtung/Kondensation und Destillation auf wieder einsetzbaren Chlorwasserstoff aufgearbeitet werden. Der Wasserstoff kann abgefackelt oder zur Energieerzeugung verwandt werden.

Aufgrund des Dichteunterschieds zwischen der Gasphase und der Suspension von Metallchloriden in Chlorsilanen kann nach dem Eintritt des erwähnten Dreiphasengemisches in das Hohlgefäß des Kondensators ein Teil der Suspension weitgehend frei von gasförmigen Bestandteilen zur Einleitungsstelle des Rohgases zurückgeführt werden. Der Gehalt dieser Suspension an Metallchloriden kann in weiten Grenzen schwanken und liegt im allgemeinen bei 0,1 bis 8 Gew.-%. Die Suspension wird, wie bereits erwähnt, zweckmäßig mit einer Lineargeschwindigkeit von 2 bis 8 m/s zurückgeführt, wodurch eine Ablagerung von Metallchloriden in dem äußeren Umlaufrohr 18 vermieden wird. Die Lineargeschwindigkeit läßt sich, wie zuvor beschrieben, durch die in der Zeiteinheit zugeführte Rohgasmenge und deren Einleitungsgeschwindigkeit steuern.

Der andere Teil der Suspension wird nach dem erfindungsgemäßen Verfahren in Metallchloride und Chlorsilane getrennt, wie zuvor beschrieben.

### 6.2 Beschreibung der Anlagen, Apparate und Vorrichtungen

Figur 1 gibt eine mögliche Ausgestaltung einer Filter- und Lösevorrichtung zur Ausführung des erfindungsgemäßen Verfahrens wieder. In dem gasdicht abgeschlossenen Filterraum **12** befindet sich als Filtervorrichtung **6** eine Filterpresse, der die Suspension der Metallchloride in Chlorsilanen als Zulauf **5** zugeführt wird. Als Filterpressen eignen sich im Handel befindliche Apparate. In der Praxis bewährt hat sich die BHS Autopress von der Firma BHS, 87527 Sonthofen, BR Deutschland. Sie verfügt über vertikal angeordnete, plattenförmige Filterelemente und ist für die Zwecke der Erfindung mit Gewebe aus Edelstahl als Filtermaterial ausgestattet. Die Suspension wird in die Plattenzwischenräume gepumpt, und die Metallchloride scheiden sich auf den Außenseiten der Filterplatten ab, während die Chlorsilane über den Ablauf **7** als Filtrat über Distanzstücke ablaufen, die zwischen den Filterplatten angeordnet sind. Wenn der Filterkuchen die Zwischenräume der Platten ausgefüllt hat, wird er gepreßt und anschließend durch Inertgasdruck vom Inneren der Filterplatten her ausgeworfen. Bei der BHS Press laufen alle Arbeitsgänge automatisch ab.

Der ausgeworfene Filterkuchen **8**, der infolge der Pressung recht fest ist, wird über eine inertisierte Schleuse **13** zunächst einem Zerkleinerer **14** zugeführt. Als Zerkleinerer eignen sich z.B. Stachelwalzen. Das zerkleinerte Metallchlorid wird mittels einer Förderschnecke **15** einem Lösegefäß **9** zugeführt, das ein Rührbehälter ist, der über den Zulauf **16** mit Wasser oder verdünnter Salzsäure beschickt werden kann. Die entstehende saure Metallsalzlösung wird über den Auslauf 11 entnommen und kann ohne weiteres einer Abwasserbehandlung zugeführt werden.

In der Figur 2 ist das Schema einer Anlage dargestellt, die die vorteilhafte Herstellung des Edukts nach der gleichzeitig anhängigen Patentanmeldung DE 100 30 251 sowie dessen Aufarbeitung nach dem erfindungsgemäßen Verfahren einschließt. Das Rohgas **1** aus der Chlorsilansynthese wird in die Suspension von Metallchloriden in flüssigen Chlorsilanen eingeleitet, die in einem Umlauf **2** zirkuliert, der teils außerhalb, teils innerhalb der Kondensationszone **3** liegt. In einem Wärmetauscher **3a** innerhalb der Kondensationszone **3** wird das durch Einleitung des Rohgases entstehende dreiphasige Gemisch aus einer Suspension von Metallchloriden in Chlorsilan und nicht kondensierten gasförmigen Anteilen des Rohgases **1** mit Kühlwasser indirekt gekühlt. Im oberen Teil der Kondensationszone **3** trennen sich die noch gasförmigen Anteile **4** des Rohgases **1** von der Suspension. Aus den gasförmigen Anteilen **4** werden durch Tieftemperaturkondensation (nicht dargestellt) die darin enthaltenen Chlorsilane abgetrennt.

Der Überlauf **5** ist der Teil der Suspension aus Metallchloriden in Chlorsilanen, der erfindungsgemäß auf Chlorsilane aufgearbeitet wird. Er wird der Fest/Flüssig-Trennung **6** zugeführt. Deren flüssige Phase **7** (Chlorsilane) wird durch Destillation (nicht dargestellt) in die verschiedenen Chlorsilane zerlegt, vorteilhaft zusammen mit den durch Tieftemperaturkondensation gewonnenen Chlorsilanen. Die feste Phase **8** (Metallchloride) gelangt in die Lösungszone 9, wo sie in Wasser oder wäßrige Salzsäure **10** eingetragen wird. Die wäßrige Lösung der Metallsalze **11** wird einer Abwasserbehandlung zugeführt. Eine vorteilhafte Ausgestaltung der erfindungsgemäßen Aufarbeitung des Überlaufs **5** ist in der Figur 1 dargestellt. Der Überlauf **5** der Figur 2 ist der Zulauf **5** der Figur 1.

Figur 3 stellt einen Apparat (oder Kondensator) dar, der bei der Herstellung des Edukts für das erfindungsgemäße Verfahren nach der gleichzeitig anhängigen Patentanmeldung DE 100 30 251 Verwendung findet. In dem Apparat wird das Rohgas in die Suspension von Metallchloriden in Chlorsilanen eingeleitet. Er ist gekennzeichnet durch ein Hohlgefäß **17** mit vorzugsweise zylindrischem Querschnitt und vorzugsweise einer konischen Verjüngung im unteren Teil. Dieses Hohlgefäß kann, ebenso wie die anderen Teile des Apparates, aus Normalstahl bestehen. An dem Hohlgefäß befindet sich ein außen liegendes Umlaufrohr **18**, in dem Suspension von Metallchlorid in Chlorsilanen zirkuliert. An dem Umlaufrohr befindet sich der Einleitungsstutzen **19** für das Rohgas, das den Kreislauf antreibt. Im Hohlgefäß **17** ist der Wärmetauscher **20** angeordnet, der das dreiphasige Gemisch, das aus dem Umlauf in das Hohlgefäß **17** eintritt, mittels Kühlwassers kühlt. Im oberen Teil des Hohlgefäßes trennen sich Gas und Suspension. Die Suspension verläßt das Hohlgefäß über den Überlaufstutzen **21**, und die Gasphase entweicht über den Gasabzugstutzen **22**.

Die folgenden Beispiele sollen die Erfindung weiter erläutern, nicht aber ihren Umfang begrenzen, wie er sich aus den Patentansprüchen in Verbindung mit der Beschreibung und den Zeichnungen ergibt.

### Beispiel 1

Man arbeitet mit einer Anlage gemäß Figur 2, die eine erfindungsgemäße Filter- und Lösevorrichtung gemäß Figur 1 und einen Kondensator gemäß gemäß Figur 3 einschließt. Das 135°C heiße Rohgas 1 einer Chlorsilan-Synthese aus technischem Silizium und Chlorwasserstoff mit einem Metallchlorid-Gehalt von 1,05 kg auf 1.000 kg Chlorsilan wird in die flüssige Suspension **2** aus Metallchlorid und Chlorsilanen eingeleitet, die eine Temperatur von 35°C hat. Das dreiphasige Gemisch aus der Suspension von Metallchloriden in flüssigem Chlorsilan und nicht kondensierten Anteilen des eingeleiteten Rohgases durchströmt in dem Kondensator **3** den mit Wasser von 23°C gekühlten Wärmetauscher **20**, an dessen oberen Ende es eine Temperatur von 23°C hat. Dort entweichen die nicht kondensierten Anteile **4** des Rohgases **1**, und die darin enthaltenen Chlorsilane werden durch Tieftemperaturkühlung bis -70°C abgeschieden.

Der Überlauf **5** der Suspension aus Metallchloriden in Chlorsilanen mit einem Metallchloridgehalt von 2,0 kg auf 1.000 kg Chlorsilane gelangt mit einer Temperatur von 34°C auf die gekapselte und mit Stickstoff inertisierte Filterpresse **6**. Der dort anfallende Filterkuchen **8** hat einen Metallchloridgehalt von 51 Gew.-% und wird über die Feststoffschleuse **13**, den Zerkleinerer **14** und die Förderschnecke **15** dem Lösegefäß **9** zugeführt, das mit ca. 1 Kubikmeter/h Wasser beschickt wird. Die entstehende wäßrige Metallsalzlösung hat einen Metallchloridgehalt von 0,30 Gew.-%, einen Chlorwasserstoffgehalt von 0,23 Gew.-% und enthält geringe Mengen an Hydrolyseprodukten der im Filterkuchen enthalten gewesenen Chlorsilane. Sie wird einer Abwasserbehandlung zugeführt.

Das Filtrat **7** wird zusammen mit den aus den nicht kondensierten Anteilen **4** des Gasgemisches **1** durch Tieftemperaturkühlung abgeschiedenen Chlorsilanen durch Destillation aufgearbeitet.

Auf den Kühlflächen und den anderen Anlageteilen sind auch nach mehrjährigem Betrieb nur geringe Ablagerungen vorhanden, die deren Funktion nicht beeinträchtigen.

### Beispiel 2

Man arbeitet im wesentlichen wie im Beispiel 1. Das Rohgas 1 hat jedoch eine Temperatur von 145°C und enthält ca. 24 kg Metallchloride und ca. 30 kg nicht umgesetzten Siliziumstaub auf 1.000 kg Chlorsilane. Die Suspension von Metallchloriden in Chlorsilanen, in die das Rohgas nach einer Trockenfiltration eingeleitet wird, weist eine Temperatur von 43°C auf. Das Rohgas wird innerhalb von weniger als 1 sec durch Direktkühlung mit dem flüssigen Chlorsilan auf 46°C abgekühlt. Dazu wird die Kühlzone des mit der Suspension gefluteten Kondensators **3** mit 6 Kubikmeter/h Kühlwasser von 21°C beaufschlagt.

Der Überlauf **5** der Suspension hat einen Gehalt an Metallchloriden von 1,4 kg auf 1.000 kg Chlorsilan und eine Temperatur von 46°C. Er wird einer Filterpresse **6** zugeführt, aus der periodisch ein Filterkuchen **8** mit ca. 85 Gew.-% Metallchloridanteil ausgestoßen wird. Der Filterkuchen wird wie in Beispiel 1 beschrieben dem Lösegefäß **9** zugeführt, das mit 1 Kubikmeter/h Wasser beaufschlagt wird. Die entstehende wäßrige Lösung mit einem Metallchlorid-Gehalt von 0,24 Gew.-% und einem Chlorwasserstoffanteil von 0,04 Gew.-% wird einer Abwasserbehandlungsanlage zugeführt.

Das Filtrat 7 wird zusammen mit den durch eine mehrstufige Tieftemperaturkondensation (bis zu -53°C) aus den nicht kondensierten Anteilen **4** des Rohgases **1** abgetrennten Chlorsilanen durch Destillation aufgearbeitet.

## Patentansprüche

1. Verfahren zur Abtrennung von Metallchloriden aus deren Suspensionen in Chlorsilanen, **dadurch gekennzeichnet, daß** man die Suspension unter Luft- und Feuchtigkeitsausschluß in einer inertisierten Zone unter Druck filtriert, den Filterkuchen in einer inertisierten Zone zerkleinert und den zerkleinerten Filterkuchen einer Lösungszone zuführt, in der die Metallchloride zu einer wäßrigen Metallchlorid-Lösung gelöst werden.

2. Verfahren nach Anspruch 1, **dadurch gekennzeichnet, daß** die Filtervorrichtungen für die Filtration unter Druck Kerzenfilter oder Filterpressen sind,

3. Verfahren nach Anspruch 1 oder 2, **dadurch gekennzeichnet, daß** man das Verfahren absatzweise oder quasi-kontinuierlich mit alternierend arbeitenden Filtervorrichtungen durchführt.

4. Ausgestaltung des Verfahrens nach einem der Ansprüche 1 bis 3, **dadurch gekennzeichnet, daß** man die Suspension aus dem bei der Umsetzung von technischem Silizium mit Chlorwasserstoff entstehenden heißen, gasförmigen Reaktionsgemisch (Rohgas) herstellt, indem man das Rohgas in eine im Kreis geführte Suspension von Metallchloriden in Chlorsilanen einleitet, die Temperatur das Rohgases von dessen Einleitungstemperatur bis zur Temperatur des bei der Einleitung entstehenden dreiphasigen Gas/Flüssigkeits/Feststoff-Gemisches zum Teil durch direkte, durch Verdampfung von Chlorsilanen bewirkte Kühlung und zum Teil durch indirekte Kühlung absenkt.

5. Verfahren nach Anspruch 4, **dadurch gekennzeichnet, daß** man die Suspension bei Atmosphärendruck oder erhöhtem Druck bis 5,0 bar herstellt.

6. Verfahren nach Anspruch 4 oder 5, **dadurch gekennzeichnet, daß** man das gasförmige Reaktionsgemisch mit hoher Geschwindigkeit in das flüssige, im Kreis geführte Chlorsilan einleitet.

7. Verfahren nach Anspruch 6, **dadurch gekennzeichnet, daß** man das Rohgas mit einer solchen Geschwindigkeit in die Suspension einleitet, daß eine Lineargeschwindigkeit des entstehenden Gas/Flüssigkeits/Feststoff-Gemisches von 2 bis 8 m/s resultiert.

8. Filter- und Lösevorrichtung für die Abtrennung und weitere Behandlung der Metallchloride aus einer Suspension in Chlorsilanen, **gekennzeichnet durch** einen gasdichten Filterraum **12**; eine darin eingeschlossene Filtervorrichtung **6**; einen Zulauf **5** für die Suspension; einen Abzug für flüssige Chlorsilane **7**; eine Inertgasschleuse **13**; einen Zerkleinerer **14** für den Filterkuchen **8**; eine Fördervorrichtung für den zerkleinerten Filterkuchen **15**; und ein Lösegefäß **9** mit einem Zulauf **16** für Wasser oder Salzsäure und einem Ablauf **11** für die saure Metallsalzlösung.

9. Apparat (Kondensator) für die Einleitung des Rohgases in eine im Kreis geführte Suspension aus Metallchloriden in Chlorsilanen gemäß einem der Anspüche 4 bis 7, **gekennzeichnet durch** ein Hohlgefäß **17** mit vorzugsweise zylindrischem Querschnitt und vorzugsweise einer konischen Verjüngung im unteren Teil; ein äußeres Umlaufrohr **18**; einen daran angebrachten Stutzen **19** zur Rohgaseinleitung; einen in dem Hohlgefäß **17** angeordneten Wärmetauscher **20**; einen Überlaufstutzen **21** und einen Gasabzugstutzen **22**.
